# EUROPÄISCHE PATENTSCHRIFT

(11) **EP 1 190 507 B1**
(45) Veröffentlichungstag und Bekanntmachung des Hinweises auf die Patenterteilung: **17.11.2004**
(21) Anmeldenummer: 00931508.6
(22) Anmeldetag: 08.06.2000
(51) Int. Cl.: H04B 7/10

(54) **EMPFÄNGER FÜR ZWEI ORTHOGONAL POLARISIERTE SIGNALE**
RECEIVER FOR TWO ORTHAGONALLY POLARISED SIGNALS
RECEPTEUR POUR DEUX SIGNAUX POLARISES ORTHOGONALEMENT

(30) Priorität: 11.06.1999 DE 19926658
(43) Veröffentlichungstag der Anmeldung: 27.03.2002
(73) Patentinhaber: Marconi Communications GmbH, 71520 Backnang (DE)
(72) Erfinder: HERBIG, Gerhard, D-71570 Oppenweiler (DE)
(74) Vertreter: Camp, Ronald
(86) Internationale Anmeldenummer: PCT/IB2000/000806
(87) Internationale Veröffentlichungsnummer: WO 2000/077952

(56) Entgegenhaltungen:
- EP-A- 0 418 781
- US-A- 5 710 799
- US-A- 5 852 629
- BIESTER M ET AL: "HARDWARE REALIZATION OF AN XPIC SYSTEM / MEASUREMENT METHOD AND RESULTS" EUROPEAN CONFERENCE ON RADIO RELAY SYSTEMS,GB,LONDON, IEE, Bd. CONF. 4, 11. Oktober 1993 (1993-10-11), Seiten 255-260, XP000479346 ISBN: 0-85296-594-X in der Anmeldung erwähnt

## Beschreibung

Die vorliegende Erfindung betrifft einen Empfänger für zwei orthogonal polarisierte Signale mit gleicher Trägerfrequenz, wobei für jedes der beiden Signale ein Empfangszweig vorhanden ist, in dem jeweils ein Demodulator und Mittel zur Synchronisation der Phase der empfangenen Signale auf die Sendephase vorgesehen sind, und wobei für beide Empfangszweige Polarisationsentkoppler vorhanden sind, welche ein kreuzpolares Übersprechen zwischen den beiden empfangenen Signalen kompensieren. Ein derartiger Empfänger wird in US-A-5 710 799 beschrieben.

Um beim Richtfunk die verfügbaren Kanalfrequenzen besser ausnutzen zu können, werden jeweils zwei Sendesignale mit der gleichen Tägerfrequenz moduliert. Damit sich diese beiden Signale nicht gegenseitig stören, verwendet man im Sender linear polarisierte Funkwellen, welche für die beiden Signale aufeinander senkrecht stehen. Innerhalb des Funkübertragungskanals kommt es allerdings zu Depolarisationseffekten. Ursache hierfür sind inhomogene Luftschichten, welche Echos erzeugen, die zusätzlich in der Polarisationsebene verdreht sind. Die beiden vom Empfänger aufgenommenen Empfangssignale weisen daher nicht nur einen kopolaren Signalanteil sondern auch einen kreuzpolaren Signalanteil auf. Der koplonare Signalanteil ist das Nutzsignal mit der unverfälschten Polarisation. Der kreuzpolare Signalanteil ist ein Übersprechsignal, das durch den Depolarisationseffekt von dem auf der anderen Polarisation ausgestrahlten Sendesignal stammt und dem kopolaren Signalanteil überlagert ist.

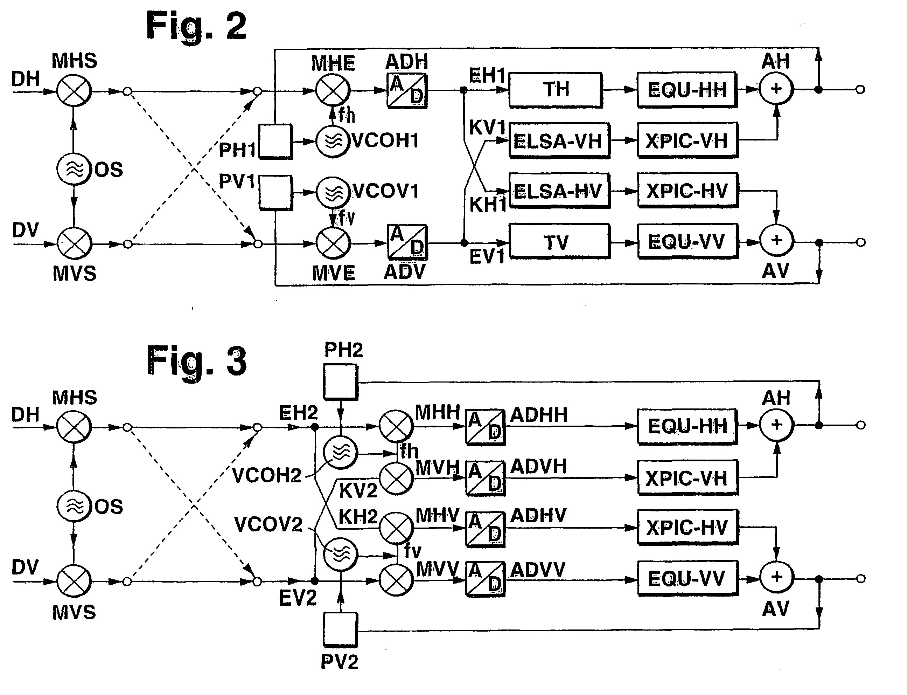

Um das auf dem Übertragungskanal entstehende Kanalübersprechen zu kompensieren, müssen im Empfänger geeignete Maßnahmen ergriffen werden. Bekanntermaßen werden hierfür sogenannte Polarisationsentkoppler verwendet, die im englischsprachigen Raum als Cross Polarization Interference Canceller oder abgekürzt XPIC bezeichnet werden. Bei M. Biester et al.: Hardware Realization on an XPIC System/Measurement Method and Results, Radio Relay Systems, 11 - 14. October 1993, Conference Puplication No. 386, Seite 255 bis 260 ist ein Empfänger der eingangs genannten Art beschrieben, der mittels Polarisationsentkopplern das kreuzpolare Übersprechen in den einzelnen Empfangszweigen kompensiert. Dieser bekannte Empfänger ist in der Figur 2 dargestellt.

Im linken Teil der Figur 2 ist angedeutet, daß zwei Sendesignale mit gleicher Trägerfrequenz erzeugt werden, die orthogonal zueinander polarisiert über einen Übertragungskanal zu einem Empfänger übertragen werden. Das horizontal polarisierte Sendesignal entsteht durch Modulation eines von einem Oszillator OS zur Verfügung gestellten Trägersignals mit Daten DH in einem Modulator MHS, und das vertikal polarisierte Sendesignal entsteht durch Modulation desselben Trägersignals mit Daten DV in einem Modulator MVS. Der Übertragungskanal ist durch vier strichlierte Pfeile angedeutet. Dabei kennzeichnen die waagerecht verlaufenden Pfeile den kopolaren Signalanteil des horizontal polarisierten Sendesignals und des vertikal polarisierten Sendesignals. Die überkreuzten strichlierten Pfeile symbolisieren das kreuzpolare Übersprechen beider Sendesignale.

Der am Ende des Übertragungskanals folgende Empfänger besitzt zwei Empfangszweige, wobei einem Empfangszweig das horizontal polarisierte Empfangssignal und dem anderen Empfangszweig das vertikal polarisierte Empfangssignal zugeführt wird. Die Polarisationstrennung der Empfangssignale und entsprechende Aufteilung auf die beiden Empfangszweige erfolgt in einer Antenne mit zwei gegeneinander verdrehten Empfangselementen, die hier nicht dargestellt sind. Zu Beginn werden die Empfangssignale in den beiden Empfangszweigen demoduliert. Dazu befindet sich im Empfangszweig für das horizontal polarisierte Empfangssignal ein Mischer MHE, der mit einer von einem spannungsgesteuerten Oszillator VCOH1 gelieferten Referenzfrequenz fh angesteuert wird. Der Demodulator setzt das Empfangssignal nicht nur in das Basisband um, sondern führt auch eine Synchronisation der Phase des Empfangssignalträgers auf den Sendesignalträger durch. Die Phasensynchronisation wird durch einen Block PH1 symbolisiert, der das Ausgangssignal des Empfangszweiges als Regelgröße erhält. Auf diese Phasensynchronisation wird hier nicht näher eingegangen, da sie gemäß dem Stand der Technik, z.B. mittels einer Phasenregelschleife, durchgeführt werden kann und auch nicht Gegenstand der Erfindung ist. Im anderen Empfangszweig für das vertikale Empfangssignal wird eine eben solche Demodulation einschließlich einer Phasensynchronisation durchgeführt. Dazu ist ein Mischer MVE in dem Empfangszweig für das vertikal polarisierte Empfangssignal vorhanden, der von einem spannungsgesteuerten Oszillator VCOV1 eine Referenzfrequenz fv erhält. Ein Block PV1 symbolisiert die Synchronisation des vertikal polarisierten Empfangssignals auf die Sendesignalphase.

Die nach der Demodulation in den beiden Empfangszweigen ins Basisband herabgesetzten Empfangssignale werden anschließend einem Analog-/Digital-Umsetzer ADH, ADV zugeführt, damit die anschließende Weiterverarbeitung der Empfangssignale mit Hilfe digitaler Filter fortgeführt werden kann.

Das horizontal polarisierte Empfangssignal EH1 wird im Anschluß an den Analog-Digital-Umsetzer ADH einem Verzögerungsglied TH und einem Entzerrer EQU-HH zugeführt, welcher Echos im Empfangssignal, die aufgrund von Mehrwegeausbreitung im Übertragungskanal entstehen, kompensiert. In gleicher Weise wird das vertikal polarisierte Empfangssignal EV1 im Anschluß an die Analog-Digital-Umsetzung ADV einem Verzögerungsglied TV und einem Entzerrer EQU-VV zugeführt. Ein Teil des horizontal polarisierten Empfangssignals EH1 im ersten Signalzweig wird zwischen dem Analog-Digital-Umsetzer ADH und dem Verzögerungsglied TH abgegriffen. Dieses Kompensationssignal KH1 wird einem elastischen Speicher ELSA-HV und einem anschließenden Kreuzpolarisationsentkoppler XPIC-HV zugeführt und danach mittels eines Addierers AV dem verzögerten TV und entzerrten EQU-VV vertikal polarisierten Empfanggsignal EV1 überlagert.

Die beiden elastischen Speicher ELSA-VH und ELSA-HV und auch die Verzögerungsglieder TH und TV dienen dazu, die unterschiedlichen Taktphasen in den beiden Empfangszweigen aneinander anzupassen. Denn nur wenn vollständige Taktphasensynchronität in den beiden Empfangszweigen vorliegt, ist das aus dem vertikalen Empfangszweig abgeleitete Kompensationssignal KV1 in der Lage, das kreuzpolare Übersprechen im horizontalen Empfangszweig zu kompensieren, und das aus dem horizontalen Empfangszweig abgeleitete Kompensationssignal KH1 ist dann in der Lage, das kreuzpolare Übersprechen im vertikalen Empfangszweig zu kompensieren. Die Kreuzpolarisationsentkoppler XPIC-VH und XPIC-HV sind wie die Entzerrer EQU-HH und EQU-VV digitale Filter mit adaptiver Einstellung der Filterkoeffizienten. Von der Einstellung der Filterkoeffizienten hängt die Kompensation der Übersprechsignalanteile in den einzelnen Empfangszweigen ab. Die adaptive Einstellung der Filterkoeffizienten gehört bereits zum Stand der Technik und ist z.B. in der EP 0 418 781 B1 beschrieben.

Bei dem zuvor beschriebenen aus der eingangs zitierten Literaturstelle bekannten Verfahren sind die Polarisationsentkoppler XPIC-VH und XPIC-HV nicht in der Lage, das kreuzpolare Übersprechen in den beiden Empfangszweigen zu kompensieren, solange die Trägerregelungen in den beiden Empfangszweigen noch nicht eingerastet sind. Für eine optimale Löschung des Kanalübersprechens müssen die Kompensationssignale KV1 und KH1 genau die gleichen Eigenschaften aufweisen wie die Übersprechsignalanteile in den Empfangszweigen, insbesondere muß das jeweilige Kompensationssignal KV1 bzw. KH1 mit der gleichen Frequenz demoduliert sein wie der Übersprechsignalanteil in den Empfangssignalen EH1 bzw. EV1. Da das Kanalübersprechen im horizontalen bzw. vertikalen Empfangszweig demoduliert wird, das Kompensationssignal KV1 bzw. KH1 aber im vertikalen bzw. horizontalen Empfangszweig demoduliert wird, ist die genannte Voraussetzung der Frequenzgleichheit nur dann erfüllt, wenn die Trägerfrequenzen in beiden Empfangszweigen identisch sind. Dies ist nach Ablauf aller Einschwingvorgänge auch erfüllt, jedoch nicht zu Beginn einer Übertragung oder nach einem Ausfall des Systems. Die von Richtfunkgeräten erwartete Selbstsynchronisierung auch bei stärksten Kanalverzerrungen ist deshalb bei der zuvor beschriebenen bekannten Anordnung nicht in jedem Fall gewährleistet. Nur für solche Modulationsverfahren, welche durch gezielte Maßnahmen eine besonders robuste Trägerphasensynchronisation herbeiführen lassen, ist die beschriebene Anordnung geeignet, Kanalübersprechen in jeder Übertragungsphase zu kompensieren. Eine dieser Maßnahmen ist beispielsweise in der DE 41 00 099 C1 beschrieben. Die in dieser Druckschrift beschriebene Anordnung zur Trägerrückgewinnung funktioniert aber nur für quadratische QAM-Signalkonstellationen (16-, 64-, 256-QAM). Eine geeignete entsprechende Maßnahme für runde oder sogenannte Cross QAM-Signalkonstellationen (36-, 128-QAM) ist nicht bekannt.

In den beiden Empfangszweigen eines Empfängers für zwei orthogonal polarisierte Signale mit gleicher Trägerfrequenz werden zwar die gleichen Trägerfrequenzen fh und fv verwendet, jedoch dürfen die beiden Demodulatoroszillatoren (VCOH1, VCOV1 in Figur 2) nicht ohne weiteres starr miteinander verkoppelt werden, da sich durch unterschiedliche Ausbreitungsbedingungen unterschiedliche Empfangssignalphasen ergeben und die Demodulatoren entsprechende Freiheitsgrade benötigen. Aus diesem Grund wird für runde QAM-Signalkonstellationen, z.B. 128-QAM, ein anderes Empfängerkonzept für die Kompensation von kreuzpolarem Nebensprechen verwendet, wie es in der Figur 3 dargestellt und aus R. Schmidmaier et al.: A New Cochannel Radio System for 28/30 MHz Frequency Spacings Based on a Narrow-Band RF Branching Concept, ECRR 5, 14-17 May 1996, Seite 232 bis 237 bekannt ist.

Bei diesem bekannten, in Figur 3 gezeigten, 128-QAM Empfänger wird aus dem horizontal polarisierten Empfangssignal EH2 ein Kompensationssignal KH2 und aus dem vertikal polarisierten Empfangssignal EV2 ein Kompensationssignal KV2 vor der Demodulation der Empfangssignale ausgekoppelt. Damit ist es möglich, das horizontal polarisierte Empfangssignal EH2 zusammen mit dem ihm zugeordneten Kompensationssignal KV2 mit derselben Oszillatorfrequenz fh und ebenso das vertikal polarisierte Empfangssignal EV2 mit seinem zugehörigen Kompensationssignal KH2 mit derselben Oszillatorfrequenz fv zu demodulieren. Deshalb ist für jedes der Signale EH2, KV2, EV2, KH2 ein eigener Mischer vorhanden, nämlich für das Signal EH2 der Mischer MHH, für das Signal KV2 der Mischer MVH, für das Signal EV2 der Mischer MVV und für das Signal KH2 der Mischer MHV. Die beiden Mischer MHH und MVH für das Empfangssignal EH2 und das Kompensationssignal KV2 erhalten dieselbe Referenzfrequenz fh von einem spannungsgesteuerten Oszillator VCOH2. Die Mischer MVV und MHV für das Empfangssignal EV2 und das Kompensationssignal KH2 erhalten dieselbe Referenzfrequenz fv von einem spannungsgesteuerten Oszillator VCOV2.

Neben der Umsetzung in das Basisband für die genannten vier Signale findet auch gleichzeitig in den Demodulatoren eine Synchronisation der Phase der empfangenen Signale auf die Sendephase statt. Wie bereits im Zusammenhang mit der Figur 2 beschrieben, sind auch bei dem in der Figur 3 dargestellten Empfänger durch die beiden Blöcke PH2 und PV2 angedeutete Phasensynchronisationseinrichtungen vorgesehen, die als Regelgrößen die Ausgangssignale der beiden Empfangszweige erhalten und jeweils eine Stellgröße für die beiden spannungsgesteuerten Oszillatoren VCOH2 und VCOV2 liefern. Für jedes der vier ins Basisband herabgesetzten Signale ist ein eigener Analog-/Digital-Umsetzer ADHH, ADVH, ADVV und ADHV vorhanden.

Nach der beschriebenen Demodulation und im Anschluß an die Analog-/Digital-Umsetzung wird das horizontal polarisierte Empfangssignal einem Entzerrer EQU-HH, das zugehörige Kompensationssignal KV2 einem Kreuzpolarisationsentzerrrer XPIC-VH, das vertikal polarisierte Empfangssignal EV2 einem Entzerrer EQU-VV und das ihm zugehörige Kompensationssignal KH2 einem Kreuzpolarisationsentkoppler XPIC-HV zugeführt. Die Funktion der Entzerrer EQU-HH, EQU-VV und der Kreuzpolarisationsentzerrer XPIC-VH, XPIC-HV entspricht den gleich benannten Bauelementen der oben beschriebenen Figur 2.

Bei dem in der Figur 3 dargestellten Empfängerkonzept sind doppelt so viele Mischer und Analog-/Digital-Umsetzer erforderlich wie bei dem in der Figur 2 dargestellten Empfängerkonzept.

Der Erfindung liegt nun die Aufgabe zugrunde, einen Empfänger der eingangs genannten Art anzugeben, der mit möglichst geringem Schaltungsaufwand in der Lage ist, auch bei Empfangssignalen mit runden QAM-Signalkonstellationen kreuzpolares Kanalübersprechen zu kompensieren.

### Vorteile der Erfindung

Die genannte Aufgabe wird mit den Merkmalen des Anspruchs 1 dadurch gelöst, daß die Polarisationsentkopplung der beiden empfangenen Signale nach deren Demodulation und vor deren Phasensynchronisation erfolgt. Damit wird für jeden Empfangszweig nur ein Demodulator benötigt, und beide Demodulatoren können mit derselben Referenzfrequenz angesteuert werden, so daß zwischen beiden Empfangszweigen keine Differenzmodulation mehr auftreten kann. Das ist die Voraussetzung dafür, daß es für die Kreuzpolarisationsentkoppler keine Aquisitionsprobleme mehr gibt und die Kreuzpolarisationsentkopplung bereits zu Beginn einer Übertragung oder nach einer Unterbrechung bereits voll funktionsfähig ist. Der erfindungsgemäße Empfänger vereinigt also den Vorteil einer geringen Anzahl von Bauelementen des in der Figur 2 dargestellten bekannten Empfängers und den Vorteil des in der Figur 3 dargestellten bekannten Empfängers, der eine Adaption der Kreuzpolarisationsentkoppler in allen Betriebszuständen garantiert.

Gemäß Unteransprüchen ist es zweckmäßig, die Demodulatoren in beiden Empfangszweigen mit derselben entweder von einem freilaufenden oder einem durch eine automatische Frequenzregelung gesteuerten Oszillator gelieferten Referenzfrequenz anzusteuern.

### Zeichnung

Die Erfindung wird nun anhand eines in der Zeichnung dargestellten Ausführungsbeispiels näher erläutert.

Es zeigen:
Figur 1 einen Empfänger für zwei orthogonal polarisierte Signale mit gleicher Trägerfrequenz gemäß der Erfindung,
Figur 2 einen ersten Empfänger gemäß dem Stand der Technik und
Figur 3 einen zweiten Empfänger gemäß dem Stand der Technik.

### Beschreibung eines Ausführungsbeispiels

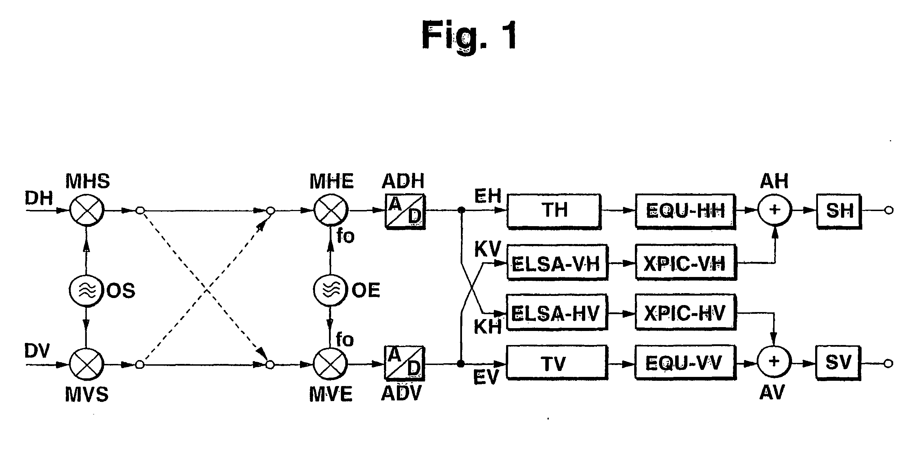

Die in den Figuren 2 und 3 dargestellten Schaltungen wurden bereits, da sie zum Stand der Technik gehören, in der Beschreibungseinleitung beschrieben. Bei der in der Figur 1 dargestellten Schaltungsanordnung haben Bauteile mit den gleichen Bezugszeichen wie in den Figuren 2 und 3 auch dieselben im Zusammenhang mit diesen Figuren beschriebene Funktionen.

Auf der linken Seite der in der Figur 1 gezeigten Schaltung ist ein Sender für zwei orthogonal polarisierte Signale mit gleicher Trägerfrequenz dargestellt. Dabei werden Daten DH für den horizontal polarisierten Kanal mit einem Mischer MHS einem von einem Oszillator OS gelieferten Trägersignal aufmoduliert. Auf dasselbe Trägersignal werden mit einem Mischer MVS Daten DV für den vertikalen Kanal aufmoduliert. Der Übertragungskanal und das darin entstehende kreuzpolare Übersprechen zwischen den Kanälen ist durch die strichlierten Pfeile angedeutet.

In den beiden Empfangszweigen befindet sich jeweils ein Demodulator, bestehend aus einem Mischer MHE (im horizontal polarisierten Empfangszweig) und einem Mischer MVE (im vertikal polarisierten Empfangszweig). Beide Mischer werden mit derselben von einem freilaufenden Oszillator OE gelieferten Referenzfrequez f0 angesteuert. Statt eines freilaufenden Oszillators kann auch ein durch eine automatische Frequenzregelung (AFC) gesteuerter Oszillator verwendet werden. Nach der Demodulation werden die Empfangssignale in den beiden Empfangszweigen jeweils einer Analog-/Digital-Umsetzung ADH, ADV unterzogen. Nach dieser Analog-/Digital-Umsetzung wird vom horizontal polarisierten Empfangssignal EH ein Kompensationssignal KH und vom vertikal polarisierten Empfangssignal EV ein Kompensationssignal KV abgezweigt. Wie bereits in der Beschreibung zu der Figur 1 ausgeführt, werden das horizontal polarisierte Empfangssignal EH und das vertikal polarisierte Empfangssignal EV jeweils einem Verzögerungsglied TH, TV und einem anschließenden Entzerrer EQU-HH, EQU-VV zugeführt. Die beiden Kompensationssignale KV und KH durchlaufen jeweils einen elastischen Speicher ELSA-VH, ELSA-HV und einen daran anschließenden Kreuzpolarisationsentkoppler XPIC-VH, XPIC-HV. Nachdem das horizontal polarisierte Signal EH das Verzögerungsglied TH und den Entzerrer EQU-HH und das zugehörige Kompensationssignal KV den elastischen Speicher ELSA-VH und den Kreuzpolarisationsentzerrer XPIC-VH durchlaufen haben, werden sie von einem Addierer AH einander überlagert. Ebenso werden das vertikal polarisierte Empfangssignal EV, nachdem es das Verzögerungsglied TV und den Entzerrer EQU-VV durchlaufen hat, und das zugehörige Kompensationssignal KH, nachdem es den elastischen Speicher ELSA-HV und den Kreuzpolarisationsentkoppler XPIC-HV durchlaufen hat, vom Addierer AV einander überlagert. Wenn, wie bereits eingangs geschildert, die Koeffizienten der einzelnen als digitale Filter ausgeführten Entzerrer EQU-HH, EQU-VV und Kreuzpolarisationsentkoppler XPIC-VH, XPIC-HV optimal eingestellt sind, werden die Übersprechsignalanteile in den Empfangssignalen EH und EV vollständig kompensiert.

Im Anschluß an die Kreuzpolarisationsentkopplung des horizontal polarisierten Empfangssignals EH und des vertikal polarisierten Empfangssignals EV folgt die Synchronisation der Phase dieser beiden Empfangssignale auf die Sendephase. Dazu ist in jedem Empfangszweig ein Baugruppe SH, SV zur Phasensynchronisation vorhanden, bestehend aus einem durch eine an sich bekannte Phasenregelschleife (PLL) geregelten Phasendrehglied.

Durch die Trennung des eigentlichen Demodulationsprozesses von der Phasensynchronisation wird erreicht, daß es niemals zu unterschiedlichen Frequenzlagen des Übersprechsignalanteils in den Empfangssignalen EH und EV und des zugehörigen Kompensationssignals KV und KH kommen kann. Während in konventionellen Demodulatoren, wie sie in den Figuren 2 und 3 dargestellt sind, die Phasenlage des Empfangsoszillators innerhalb einer Phasenregelschleife genau synchron zur Phasenlage des Senderoszillators eingestellt wird und damit eine Phasensynchronität der demodulierten Basisbandsignale zum Sendesignal vorliegt, werden in der Schaltung gemäß Figur 1 der Demodulationsprozeß und der Synchronisationsprozeß in unterschiedlichen Baugruppen durchgeführt. Die demodulierten Empfangssignale sind dann zwar auch Basisbandsignale, sie können aber gegenüber den Sendesignalen auch noch Fehler bezüglich der Mittenfrequenz aufweisen. Die restlichen Frequenz- und Phasenfehler werden in den nachfolgenden Synchronisationsbaugruppen SH und SV entfernt. Die beschriebene Schaltung macht es möglich, die Empfangssignale in beiden Empfangszweigen mit identischer Frequenz zu demodulieren, aber auf unterschiedliche Phasen zu synchronisieren. Die Übersprechsignalanteile in den Empfangssignalen EH, EV und die zugehörigen Kompensationssignale KV und KH besitzen die gleiche Frequenzlage, womit die Adaption der Kreuzpolarisationsentkoppler XPIC-VH und XPIC-HV in allen Betriebszuständen des Empfängers garantiert ist, und trotzdem sind die beiden Empfangszweige in ihrer Phasenlage völlig unabhängig voneinander. Erst durch das neuartige Konzept der gemeinsamen Demodulation der beiden Empfangssignale EH und EV und davon getrennter Phasensynchronisation wird eine zuverlässige Kreuzpolarisationsentkopplung für nicht quadratische QAM-Signalkonstellationen (z.B. 128-QAM) in XPIC-Strukturen mit Basisbandauskopplung der Kompensationssignale ermöglicht.

## Patentansprüche

1. Empfänger für zwei orthogonal polarisierte Signale mit gleicher Trägerfrequenz, wobei für jedes der beiden Signale (EH, EV) ein Empfangszweig vorhanden ist, in dem jeweils ein Demodulator (MHE, MVE) und Mittel (SH, SV) zur Synchronisation der Phase der empfangenen Signale (EH, EV) auf die Sendephase vorgesehen sind, und wobei für beide Empfangszweige Polarisationsentkoppler (XPIC-VH, XPIC-HV) vorhanden sind, welche ein kreuzpolares Übersprechen zwischen den beiden empfangenen Signalen (EH, EV) kompensieren, **dadurch gekennzeichnet, daß** die Polarisationsentkopplung (XPIC-VH, XPIC-HV) der beiden empfangenen Signale (EH, EV) nach deren Demodulation (MHE, MVE) und vor deren Phasensynchronisation (SH, SV) erfolgt.

2. Empfänger nach Anspruch 1, **dadurch gekennzeichnet, daß** die Demodulatoren (MHE, MVE) in beiden Empfangszweigen mit derselben von einem freilaufenden Oszillator (OE) gelieferten Referenzfrequenz (f0) angesteuert werden.

3. Empfänger nach Anspruch 1, **dadurch gekennzeichnet, daß** die Demodulatoren (MHE, MVE) in beiden Empfangszweigen mit derselben von einem von einer automatischen Frequenzregelung gesteuerten Oszillator gelieferten Referenzfrequenz (f0) angesteuert werden.

## Claims

1. Receiver for two orthogonally polarised signals with the same carrier frequency, with a receiver branch being provided for each of these two signals (EH, EV) in which in each case a demodulator (MHE, MVE) and means (SH, SV) for the synchronisation of the phase of the received signals (EH, EV) to the transmitter phase are provided and wherein, for both reception branches,polarisation decouplers (XPIC-VH, XPIC-HV) are present which compensate a cross-polarised cross-talk between the two received signals (EH, EV) **characterised in that**
the polarisation decoupling (XPIC-VH, XPIC-HV) of the two received signals (EH, EV) takes place after their demodulation (MHE, MVE) and before their phase synchronisation (SH, SV).

2. Receiver in accordance with claim 1, **characterised in that** the demodulators (MHE, MVE) in the two receiver branches are controlled with the same reference frequency (f0) supplied by a free-running oscillator (OE).

3. Receiver in accordance with claim 1, **characterised in that** the demodulators (MHE, MVE) in the two receiver branches are controlled with the same reference frequency (f0) delivered from an oscillator controlled by an automatic frequency regulation.

## Revendications

1. Récepteur pour deux signaux à polarisation orthogonale ayant une même fréquence porteuse, sachant qu'il existe pour chacun des deux signaux (EH, EV) une branche de réception dans laquelle sont prévus respectivement un démodulateur (MHE, MVE) et des moyens (SH, SV) pour la synchronisation de la phase des signaux reçus (EH, EV) avec la phase d'émission et sachant qu'il existe pour les deux branches de réception des découpleurs de polarisation (XPIC-VH, XPIC-HV) qui compensent une diaphonie polaire croisée entre les deux signaux reçus (EH, EV), **caractérisé en ce que** le découplage de polarisation (XPIC-VH, XPIC-HV) des deux signaux reçus (EH, EV) a lieu après leur démodulation (MHE, MVE) et avant leur synchronisation de phase (SH, SV).

2. Récepteur selon la revendication 1, **caractérisé en ce que** les démodulateurs (MHE, MVE) sont activés dans les deux branches de réception avec la même fréquence de référence (f₀) fournie par un oscillateur en régime libre (OE).

3. Récepteur selon la revendication 1, **caractérisé en ce que** les démodulateurs (MHE, MVE) sont activés dans les deux branches de réception avec la même fréquence de référence (f₀) fournie par un oscillateur commandé par une régulation automatique de fréquence.
